(19) Europäisches Patentamt
European Patent Office
Office européen des brevets

(11) Veröffentlichungsnummer : **0 113 315**
**B1**

(12) **EUROPÄISCHE PATENTSCHRIFT**

(45) Veröffentlichungstag der Patentschrift : **30.09.87**

(21) Anmeldenummer : **83810559.1**

(22) Anmeldetag : **02.12.83**

(51) Int. Cl.⁴ : **C 08 J 5/24**, C 08 J 5/06// C08F222/06 ,(C08F222/06, 226:06)

(54) **Mit zwei verschiedenen Harzen beschichtete Faserverbund-Prepregs.**

(30) Priorität : **08.12.82 CH 7141/82**

(43) Veröffentlichungstag der Anmeldung : **11.07.84 Patentblatt 84/28**

(45) Bekanntmachung des Hinweises auf die Patenterteilung : **30.09.87 Patentblatt 87/40**

(84) Benannte Vertragsstaaten : **CH DE FR GB LI**

(56) Entgegenhaltungen :
**DE-A- 2 212 788**
**FR-A- 2 499 997**

(73) Patentinhaber : **CIBA-GEIGY AG**
**Klybeckstrasse 141**
**CH-4002 Basel (CH)**

(72) Erfinder : **Eldin, Sameer H., Dr.**
**Route de Schiffenen 10**
**CH-1700 Fribourg (CH)**

**EP 0 113 315 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

An Faserverbundwerkstoffe, die als Leichtbauwerkstoffe weite Verbreitung gefunden haben, werden hohe Anforderungen, insbesondere bezüglich der interlaminaren Scherfestigkeit und der Schlagbiegfestigkeit, gestellt. Es ist bekannt, dass man die Endeigenschaften eines Verbundes aus Verstärkungsfasern und einer Kunststoffmatrix mittels einer polymeren Zwischenschicht verbessern kann. Eine besonders vorteilhafte Methode zur Auftragung einer Polymer-Beschichtung auf Verstärkungsfasern, wobei diese Beschichtung im Faserverbundsystem die polymere Zwischenschicht darstellt, ist bekanntlich die Elektrolackierung (electrodeposition), da sie kontinuierlich durchgeführt werden kann und die Herstellung von Beschichtungen bestimmter Filmdicke mit grosser Gleichmässigkeit ermöglicht. In SPI, Proceedings of the thirty-third Annual Conference, Reinforced Plastics/Composite Institute, Februar 6, 1978, wird bereits offenbart, dass bestimmte carboxylfunktionelle Copolymere auf Basis von Maleinsäureanhydrid und Styrol, Methyl-vinyläther oder Olefinen, wie Hexen, Decen oder Octadecen, für die Elektrolackierung von Kohlenstoffasern geeignet sind und in Kombination mit einer Epoxidharzformulierung zu Laminaten mit wertvollen mechanischen Eigenschaften verarbeitet werden können.

Es wurde nun gefunden, dass mit Copolymeren aus Hydantoinvinyläther und Maleinsäurederivat beschichtete Verstärkungsfaser geeignetere Materialien zur Herstellung von Faserverbundsystemen darstellen, da sie dem Verbund bessere mechanische Eigenschaften, insbesondere eine bessere interlaminare Scherfestigkeit und Schlagbiegefestigkeit verleihen.

Gegenstand vorliegender Erfindung sind somit Faserverbund-Prepregs bestehend aus

(a) mit einem Copolymer beschichteten Verstärkungsfasern oder einem Gewebe daraus, wobei das Copolymer aus Maleinsäureanhydrid oder Maleinsäurederivat und einem Hydantoinvinyläther der Formel (I)

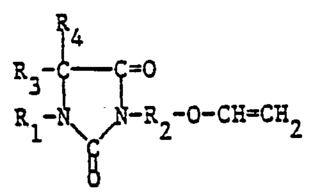

(I)

besteht, worin $R_1$ Wasserstoff, Phenyl, Methyl, Cyanäthyl, Glycidyl, Hydroxymethyl, Hydroxyäthyl, Hydroxypropyl, Acetyl oder 2-Hydroxy-2-phenyläthyl, $R_2$ ein Alkylen mit 1 bis 6 C-Atomen oder den Rest $-(\text{-Alkylen-O-})_n$ Alkylen, wobei die Alkylene 1 bis 6 C-Atome enthalten und n eine Zahl von 1 bis 6 ist, und $R_3$ und $R_4$ unabhängig voneinander je ein Wasserstoff, ein Alkyl mit 1 bis 6 C-Atomen, ein Aryl oder $R_3$ und $R_4$ zusammen den Tetra- oder Pentamethylenrest bedeuten, und wobei im Copolymer das Molverhältnis von Hydantoinvinyläther zu Maleinsäureanhydrid bzw. Maleinsäurederivat 0,5 : 1 bis 1 : 1 beträgt, und

(b) einer härtbaren Harzmatrix.

Vorzugsweise besteht die Beschichtung aus einem Copolymer, das unter Verwendung eines Hydantoinvinyläthers der Formel I, worin $R_1$ Wasserstoff oder Methyl, $R_2$ Aethylen, Propylen oder Butylen und $R_3$ sowie $R_4$ unabhängig voneinander je Wasserstoff, Methyl, Aethyl oder Isopropyl oder zusammen Tetra- oder Pentamethylen bedeuten, hergestellt wurde.

Ferner wird zur Herstellung der für die Beschichtung verwendeten Copolymeren vorzugsweise Maleinsäureanhydrid eingesetzt, wobei die im Copolymer enthaltenen Anhydridgruppen dann je nach der anzuwendenden Methode zur Aufbringung der Beschichtung auf die Verstärkungsfaser in Mononatrium-, -kalium-, -calcium- oder -ammoniumsalze, und Amide, Halbester, wobei der Veresterungsgrad von 1 bis 100 % reichen kann, oder Carboxylgruppen umgewandelt werden, indem man die Anhydridgruppen enthaltenden Copolymeren z. B. in der benzolischen Suspension mit wasserfreiem Ammoniak bzw. Natriumhydroxid, Kaliumhydroxid oder Calciumhydroxid versetzt.

In dem zur Beschichtung verwendeten Copolymer beträgt ferner das Molverhältnis von Hydantoinvinyläther zu Maleinsäureanhydrid oder Maleinsäurederivat vorzugsweise 0,8 : 1 bis 1 : 1, insbesondere 1 : 1. Solche Copolymeren weisen im allgemeinen eine spezifische Viskosität von 0,1 bis 11, vorzugsweise 0,1 bis 5, gemessen an einer 1 Gewichts-%igen Lösung in Dimethylformamid bei 25 °C.

Die zur Beschichtung der Verstärkungsfasern verwendeten Copolymeren sind aus der DE-A-2 829 307 bekannt, wo auch die Herstellung solcher Copolymeren, die sich von Maleinsäurederivaten ableiten, näher beschrieben wird.

Ein weiteres Verfahren zur Herstellung der zur Beschichtung verwendeten Copolymeren wird in der DE-A-3 205 396 (& FR-A-2 499 997) offenbart, nach dem Copolymere bestimmter spezifischer Viskositäten

erhalten werden.

Als Verstärkungsfasern kann man die üblichen bei der Faserverstärkung von Werkstoffen verwendeten Fasern einsetzen. Diese können organische oder anorganische Fasern sein, Naturfasern oder Synthesefasern, wie z. B. Aramid-Faser, als Faserbündel oder Endlosfasern vorliegen.

Beispielsweise verwendet man als Verstärkungsfasern Glas-, Asbest-, Bor-, Kohlenstoff- und Metallfasern, vorzugsweise Kohlenstoff-, Borfasern und metallische Fasern, insbesondere Kohlenstoffasern. Solche Fasern und Gewebe daraus sind im Handel erhältlich.

Das Beschichten dieser Fasern oder Gewebe mit den Maleinsäure (derivat)-Hydantoinvinyläther-Copolymeren kann in gebräuchlicher Weise durch Bestreichen oder Besprühen mit einer wässrigen oder organischen Copolymer-Lösung oder Eintauchen in die Lösung vorgenommen werden. Eine bevorzugte Beschichtungsmethode stellt die bereits erwähnte Elektrolackierung dar, da durch die Abscheidung des Polymers auf die Verstärkungsfaser in der Elektrolytzelle gleichmässigere Ueberzüge mit gewünschter Filmdicke erhalten werden, wobei eine gute Reproduzierbarkeit gegeben ist. Diese Methode setzt allerdings voraus, dass die verwendete Faser elektrisch leitfähig ist und das Copolymer geeignete Gruppen aufweist, wie beispielsweise eine Ammoniumcarboxylat- und eine Carboxylgruppe. Nach der Abscheidung des Polymers in der Elektrolytzelle wird die behandelte Faser in einem Wasserbad gewaschen und anschliessend getrocknet. Die Abscheidung des Polymers bzw. Elektrolackierung kann entweder batchweise oder kontinuierlich erfolgen. Eine für die Elektrolackierung geeignete Apparatur wird beispielsweise in SPI, Proceedings of the thirty-third Annual Conference, Reinforced Plastics/Composites Institute, February 6, 1978, beschrieben.

Die mit dem Copolymer behandelten Fasern bzw. Gewebe werden dann mit einer härtbaren, vorzugsweise in einem organischen Lösungsmittel gelösten Harzmatrix imprägniert und anschliessend getrocknet. Dabei wird das gegebenenfalls eingesetzte Lösungsmittel verdampft und man erhält dann mit härtbarem Harz imprägnierte Bahnen oder Prepregs.

Als Harzmatrix eignen sich im Prinzip alle härtbaren Harze bzw. Harzvorläufer, die im wesentlichen nicht flüchtig sind, auf die vorbehandelte Verstärkungsfaser aufgetragen und dann vernetzt werden können, wobei die Vernetzungsreaktion eine Polykondensation, Polyaddition oder Polymerisation sein kann und thermisch, katalytisch und/oder durch Strahlen bewirkt werden kann.

Bei der Harzmatrix kann es sich also um Monomere, Oligomere oder Polymere handeln, die im Faserverbund-Prepreg in vernetzte Harze übergeführt werden können.

Als Harzmatrix sind beispielsweise Epoxidharze, Aminoplastharze, Phenolharze, ungesättigte Polyestherharze, Polyarylate, Polyurethane und strahlungsvernetzbare Gruppierungen enthaltende Verbindungen geeignet. Solche Harzsysteme sind dem Fachmann bekannt.

Vorzugsweise verwendet man als Harzmatrix Epoxidharze, die vorzugsweise mit Polyaminen oder Dicyandiamid gehärtet werden, und die katalytisch härtbaren Phenolharze, insbesondere aber die Epoxidharze.

Die auf diese Weise erhaltenen Prepregs können in bekannter Weise zur Herstellung von Verbundsystemen, d. h., Verbundkonstruktionsteilen dienen, wie z. B. Karosserieteilen von Motorfahrzeugen und Flugzeugen, Boots- und Schiffskörpern, Druckgefässen, Propellern von Flugzeugen, Schiffen und Schwebefahrzeugen, Rotoren von Hubschraubern, Konstruktionselemente für Radarantennen und Weltraumsatelliten, Maschinenlager, Werkzeuge, faserverstärkte Kunststoffrohrleitungen sowie Sportartikel, wie Fiberstäbe oder Skier.

Gegenstand vorliegender Erfindung sind somit auch die aus den erfindungsgemässen Faserverbund-Prepregs unter Formgebung und Vernetzen der Harzmatrix erhaltenen Faserverbundsysteme.

Die Herstellung der Verbundkonstruktionsteile kann nach dem auch heute noch oft angewendeten Handauflegeverfahren erfolgen. Es bestehen jedoch auch andere Möglichkeiten für die Herstellung der Konstruktionsteile, wie die Fertigung mit Hilfe eines Druck- oder Vakuumsackes und vor allem das Arbeiten mit Pressformen und Plattenpressen. Auch das sogenannte Fadenwickel-Verfahren (filament-winding) ist zur Herstellung der Verbund-Materialien, speziell für die Konstruktion von Hochdruckbehältern sowie für das Gebiet der Luftschiffahrt, die Raketenbautechnik und der Weltraumschiffahrt geeignet.

Die bei der Elektrolackierung verwendete Apparatur entspricht der in der bereits genannten SPI-Publikation abgebildeten und besteht aus den folgenden Teilen

A) Abrollvorrichtung für die C-Faser
B) Kupfer-Leitplatte
C) Elektrolytzelle
D) Waschbad
E) Trockenzone
F) Aufrollvorrichtung für die C-Faser

Die Kupfer-Leitplatte B sowie die Elektrolytzelle C sind mit dem positiven bzw. mit dem negativen Pol einer Gleichstromquelle verbunden. Die Kohlenstoffaser geht ab der Abrollvorrichtung A und wird von der Kupfer-Leitplatte B positiv aufgeladen. In der Elektrolytzelle C befindet sich die wässrige Lösung des carboxyfunktionellen Copolymers sowie die mit dem negativen Pol der Gleichstromquelle verbundene

Kathode.

Bei konstant Halten der Spannung, des Stromes und der Intensität des Waschvorgangs wird für verschiedene Konzentrationen der Copolymerlösungen eine lineare Beziehung zwischen dem Copolymerauftrag (Bestimmung durch Veraschen) und der Verweilzeit der C-Faser in der Elektrolytzelle gefunden. Der Polymerauftrag kann somit durch Einstellung der Abziehgeschwindigkeit der C-Faser gesteuert werden. Beispielsweise wird bei Zugrundelegung einer Spannung von 10 Volt, eines Stromes von 1,6 Ampère, einer Konzentration der wässrigen Lösung von 2,5 Gew.-% Copolymer und eines standardisierten Waschvorganges für einen Polymerauftrag von 2 Gew.-% eine Abziehgeschwindigkeit von 105 cm/Minute für das Hydantoinvinyläther-Maleinsäureanhydrid-Copolymer I eingestellt. Die Temperatur in der Trockenzone der Anlage beträgt 210-230 °C.

Folgende Copolymere und Harzmatrix-Systeme werden in den Beispielen eingesetzt.

Copolymer I

89,2 g (0,45 Mol) 3-Vinyloxyäthyl-5,5-dimethylhydantoin, 44,1 g (0,45 Mol) Maleinsäureanhydrid und 3 600 ml Toluol werden in einem mit $N_2$ gut gespülten, mit Rührer, Thermometer, Kühler und Gaseinleitung versehenen 4-Halskolben vorgelegt und unter $N_2$ auf 105 °C erwärmt. Dann gibt man 0,67 g (0,5 Gew.-%, bezogen auf die Monomeren) Azoisobutyronitril, gelöst in wenig Toluol, hinzu und lässt das Reaktionsgemisch unter $N_2$ während 5,5 Stunden bei 104 bis 106 °C reagieren. Nach Abkühlen auf Raumtemperatur wird die Reaktionslösung filtriert und während 12-16 Stunden bei einem Vakuum von 20-30 mbar bei 60-70 °C getrocknet. Der Ansatz wird insgesamt 5 mal wiederholt, wobei in einer Ausbeute von 98-99 % der Theorie das Copolymer erhalten wird. Die vereinigten Ausbeuten werden in der Kugelmühle während 4 Stunden homogenisiert. Die spezifische Viskosität des Copolymers beträgt 0,20 (1 Gewichts-%ige Lösung in Dimethylformamid bei 25 °C).

Das Halbammoniumsalz wird durch Aufschlämmen des Copolymers in Wasser und Neutralisation der im Copolymer enthaltenen Anhydridgruppierung mit handelsüblicher Ammoniumhydroxidlösung hergestellt, wobei das Copolymer wiederkehrende Einheiten folgender Struktur aufweist

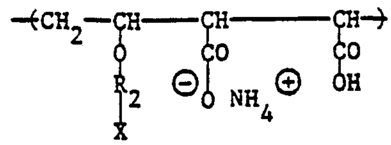

worin X für den in Formel I angegebenen Hydantoinrest steht.

Copolymer II

Ein Teil des aus 3-Vinyloxyäthyl-5,5-dimethylhydantoin und Maleinsäureanhydrid hergestellte Copolymers I mit einer spezif. Viskosität von 0,20 wird zwecks Herstellung des Amid/Ammoniumsalzes in Toluol dispergiert und unter gutem Rühren wird bei Raumtemperatur ein Ueberschuss an wasserfreiem Ammoniak in die Dispersion eingeleitet bis eine Probe vollständig wasserlöslich war. Die Lösung wird während 15 Minuten nachgerührt und anschliessend filtriert. Der Filterkuchen wird 4 mal mit 50 ml Toluol gewaschen und anschliessend bei 50 °C im Vakuum bis zur Gewichtskonstanz getrocknet und in der Kugelmühle gemahlen. Der Umsatz des Copolymers mit dem Ammoniak zu dem Amid/Ammoniumsalz erfolgt quantitativ. Das Salz weist Strukturelemente folgender Formel auf :

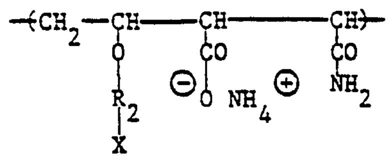

worin X für den in Formel I angegebenen Hydantionrest steht.

Harzmatrix I

300 g N,N,N',N'-Tetraglycidyl-4,4'-diaminodiphenylmethan mit einem Epoxidgehalt von 8,25 Val/kg werden bei 40-45 °C in Methyläthylketon/Aceton (1 : 1) gelöst. Nach dem Abkühlen auf Raumtemperatur werden 156 g 4,4'-Diaminodiphenylsulfon zugegeben. Nach kurzem Aufrühren liegt eine klare leicht rotgelbe Lösung vor. Durch weitere Zugabe von Lösungsmittel wird die gewünschte Konzentration der Imprägnierlösung eingestellt.

Es ist bekannt, dass die mechanischen Eigenschaften von unidirektional faserverstärkten Kunststoffen von Faservolumenanteil (φ) des Verstärkungsmaterials abhängig sind. Es ist daher üblich und erforderlich, die mechanischen Eigenschaften in Abhängigkeit des Faservolumenanteils zu bestimmen,

um dann auf einen bestimmten φ-Wert zu interpolieren. Der technisch übliche Faservolumenanteil liegt bei 0,5-0,7 (1,0 = 100 Vol.% Faser).

In den folgenden Beispielen wird der Faservolumenanteil im Laminat über die Konzentration der Imprägnierlösung gesteuert.

Beispiel 1

a. Ein C-Faserstrang (Thornel Carbon Fibre Typ P der UCC) wird unter Verwendung der zuvor beschriebenen Apparatur für Elektrobeschichtung mit dem Copolymer I beschichtet. Ausgehend von einer 2,5 Gewichts-%igen wässrigen Copolymer I-Lösung erhält man unter Anwendung des standardisierten Waschvorganges auf dem C-Faserstrang eine Beschichtung von 2 Gew.-%.

b. Herstellung der Prepregs : Der mit dem Copolymer I beschichtete C-Faserstrang wird mit einer Geschwindigkeit von 10,6 m/Minute durch ein, die Harzmatrix I enthaltendes Imprägnierbad gezogen und anschliessend auf eine, mit einer Trennfolie umwickelten Trommel mit 42 cm Durchmesser aufgewickelt. Durch sorgfältiges Führen des imprägnierten Kohlefaserstrangs wird nach etwa 25 Minuten eine gleichmässige unidirektionale Prepregbahn von etwa 12 cm Breite erhalten. Die Prepregbahn wird mit einer UV-Lampe während 15 Minuten vorgetrocknet, damit sie sich von der Trommel besser entfernen lässt. Nach dem Entfernen der Prepregbahn von der Trommel wird diese in 8 Stücke von 16 cm Länge geschnitten. Die Prepregstücke werden nun im Vakuumexsikkator bei 100 °C und 0,1 mbar während einer Stunde getrocknet. Die Prepregs sind bei Raumtemperatur noch leicht klebrig (tacky).

c. Herstellung der Laminate : Die Prepregstücke werden unidirectional, gleichmässig aufeinander geschichtet, beidseitig mit einer Kupferfolie versehen, mit einer Trennfolie umwickelt und anschliessend in einer Aluminiumform zu einem Laminat gepresst, wobei folgender Presszyklus angewendet wird.

Presszyklus :
— Prepregs bei 120 °C in die Presse legen.
— Innerhalb 20 Minuten auf 177 °C, ohne Druck, aufheizen.
— 90 Minuten bei 177 °C halten, wobei nach etwa 4 Minuten — kurz vor dem Gelieren — vorsichtig Druck gegeben wird und zwar auf einen Enddruck von 196, $14 \cdot 10^4$ — $245{,}18 \cdot 10^4$ Pa.
— Auf 205 °C aufheizen und während 4 Stunden halten.
— Unter Druck abkühlen lassen.

Die Eigenschaften der erhaltenen Laminate bezüglich interlaminarer Scherfestigkeit und Schlagbiegefestigkeit sind in der folgenden Tabelle angegeben.

| | Blindversuch (ohne Coplymerauftrag) | Beispiel 1 |
|---|---|---|
| Copolymerlösung | keine | 2,5 Gew.-% |
| Spannung/Strom | - | 10 Volt : 1.6 Ampère |
| Geschw. der C-Faser | - | 105 cm $Min^{-1}$ |
| Copolymerauftrag | - | 2 Gew.-% |
| Faservolumenanteil (φ) | 0,60 | 0.60 |
| Interlaminare Scherfestigkeit gemäss ASTM[x)] D2344 ($N/mm^2$) | 43,9 (42,4/45,4) | 49,7 (48,6/50,8) |
| Schlagbiegefestigkeit gemäss ISO[xx)] R179 ($kJ/m^2$) | 21,3 (19,9/22,7) | 33,8(32,4/35,2) |

x) ASTM = American Society for Testing and Materials
xx) ISO R = International Standards Organisation

Beispiel 2

a. Der in Beispiel 1a verwendete C-Faserstrang wird unter den in Beispiel 1a angegebenen Bedingungen mit dem Copolymer II beschichtet, wobei eine 2 Gewichts-%ige Beschichtung erhalten wird.

b. Herstellung der Prepregs : Der mit dem Copolymer II beschichtete C-Faserstrang wird wie in Beispiel 1b beschrieben mit der die Harzmatrix I enthaltenden Imprägnierlösung behandelt, wobei die erhaltenen Prepregs bei Raumtemperatur ebenfalls noch leicht klebrig sind.

c. Herstellung der Laminate : Die Prepregstücke werden analog Beispiel 1c verarbeitet, wobei die erhaltenen Laminate bei einem Faservolumen von 0,60 folgende Eigenschaften aufweisen :

| | |
|---|---|
| Interlaminare Scherfestigkeit (nach ASTM 2344) | = 57,6 (55,9/59,3) $N/mm^2$ |
| Schlagbiegefestigkeit (nach ISO R 179) | = 26,1 (25,0/27,2) $kJ/m^2$ |

**Patentansprüche**

1. Faserverbund-Prepreg bestehend aus

(a) mit einem Copolymer beschichteten Verstärkungsfasern oder einem Gewebe daraus, wobei das Copolymer aus Maleinsäureanhydrid oder Maleinsäurederivat und einem Hydantoinvinyläther der Formel (I)

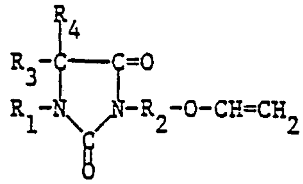

(I)

besteht, worin $R_1$ Wasserstoff, Phenyl, Methyl, Cyanäthyl, Glycidyl, Hydroxymethyl, Hydroxyäthyl, Hydroxypropyl, Acetyl oder 2-Hydroxy-2-phenyläthyl, $R_2$ ein Alkylen mit 1 bis 6 C-Atomen oder den Rest -(-Alkylene-O-)-$_n$ Alkylen, wobei die Alkylene 1 bis 6 C-Atome enthalten und n die Zahl von 1 bis 6 ist, und $R_3$ und $R_4$ unabhängig voneinander je ein Wasserstoff, ein Alkyl mit 1 bis 6 C-Atomen, ein Aryl oder $R_3$ und $R_4$ zusammen den Tetra- oder Pentamethylenrest bedeuten, und wobei im Copolymer das Molverhältnis von Hydantoinvinyläther zu Maleinsäureanhydrid bzw. Maleinsäurederivat 0,5 : 1 bis 1 : 1 beträgt, und

(b) einer härtbaren Harzmatrix.

2. Faserverbund-Prepreg gemäss Anspruch 1, dadurch gekennzeichnet, dass im Copolymer das Molverhältnis von Hydantoinvinyläther zu Maleinsäureanhydrid oder Maleinsäurederivat 0,8 : 1 bis 1 : 1 beträgt.

3. Faserverbund-Prepreg gemäss Anspruch 1, dadurch gekennzeichnet, dass die Faser oder das Gewebe daraus aus einer Kohlenstoff-, Borfaser oder einer metallischen Faser besteht.

4. Faserverbund-Prepreg gemäss Anspruch 1, dadurch gekennzeichnet, dass die Faser aus einer Kohlenstoffaser besteht.

5. Faserverbund-Prepreg gemäss Anspruch 1, dadurch gekennzeichnet, dass die härtbare Harzmatrix aus einem Epoxidharz und einem Polyamin als Härtungsmittel besteht.

6. Faserverbundsystem, insbesondere Faserverbund-Laminat, hergestellt aus dem Faserverbund-prepreg gemäss Anspruch 1 unter Formgebung und Vernetzen der Harzmatrix.

**Claims**

1. Fibre composite prepreg comprising :

(a) reinforcing fibres, or a fabric thereform, coated with a copolymer, the copolymer consisting of maleic anhydride or a maleic acid derivative and a hydantoin vinyl ether of the formula (I)

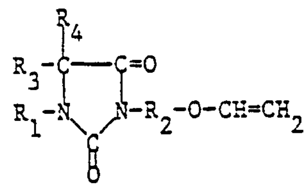

(I)

wherein $R_1$ is hydrogen, phenyl, methyl, cyanoethyl, glycidyl, hydroxymethyl, hydroxyethyl, hydroxypropyl, acetyl or 2-hydroxy-2-phenylethyl, $R_2$ is an alkylene having 1 to 6 C atoms or the radical $-(-alkylene-O-)_n$ alkylene, wherein the alkylene groups contain 1 to 6 C atoms, and n is a number from 1 to 6, and $R_3$ and $R_4$ independently of one another are each hydrogen, an alkyl having 1 to 6 C atoms, or an aryl, or $R_3$ and $R_4$ together are the tetra- or pentamethylene radical, the molar ratio of hydantoin vinyl ether to maleic anhydride or to the maleic acid derivative in the copolymer being 0.5 : 1 to 1 : 1, and

(b) a curable resin matrix.

2. Fibre composite prepreg according to Claim 1, characterized in that the molar ratio of hydantoin vinyl ether to maleic anhydride or to the maleic acid derivative in the copolymer is 0.8 : 1 to 1 : 1.

3. Fibre composite prepreg according to Claim 1, characterized in that the fibre or the fabric therefrom consists of a carbon or boron fibre or of a metallic fibre.

4. Fibre composite prepreg according to Claim 1, characterized in that the fibre consists of a carbon fibre.

5. Fibre composite prepreg according to Claim 1, characterized in that the curable resin matrix consists of an epoxy resin and a polyamine as curing agent.

6. Fibre composite system, particularly a fibre composite laminate, produced from the fibre composite prepreg according to Claim 1 by moulding and cross-linking the resin matrix.

**Revendications**

1. Pré-imprégné (« prépreg ») pour composites renforcés par des fibres, pré-imprégné qui est constitué :

(a) de fibres de renforcement revêtues d'un copolymère, ou d'un tissu confectionné avec de telles fibres, le copolymère étant constitué d'anhydride maléique, ou d'un dérivé de l'acide maléique, et d'un éther vinylique d'un composé hydantoïnique répondant à la formule I :

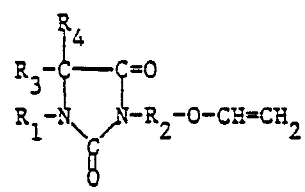

(I)

dans laquelle $R_1$ représente l'hydrogène ou un radical phényle, méthyle, cyanéthyle, glycidyle, hydroxyméthyle, hydroxyéthyle, hydroxypropyle, acétyle ou hydroxy-2 phényl-2 éthyle, $R_2$ représente un radical alkylène contenant de 1 à 6 atomes de carbone ou un radical $-(-alkylène-O-)_n$ alkylène dont les alkylènes contiennent chacun de 1 à 6 atomes de carbone et dont l'indice n désigne un nombre de 1 à 6, et $R_3$ et $R_4$ représentent chacun, indépendamment l'un de l'autre, l'hydrogène, un radical alkyle contenant de 1 à 6 atomes de carbone ou un radical aryle, ou encore $R_3$ et $R_4$ forment ensemble un radical tétraméthylène ou pentaméthylène, le rapport molaire de l'éther vinylique du composé hydantoïnique à l'anhydride maléique ou au dérivé de l'acide maléique, dans le copolymère, étant compris entre 0,5 : 1 et 1 : 1, et

(b) d'une matrice résineuse durcissable.

2. Pré-imprégné selon la revendication 1 caractérisé en ce que, dans le copolymère, le rapport molaire entre l'éther vinylique du composé hydantoïnique et l'anhydride maléique ou le dérivé de l'acide maléique est compris entre 0,8 : 1 et 1 : 1.

3. Pré-imprégné selon la revendication 1 caractérisé en ce que la fibre ou le tissu est constitué d'une fibre de carbone, d'une fibre de bore ou d'une fibre métallique.

4. Pré-imprégné selon la revendication 1 caractérisé en ce que la fibre est constituée d'une fibre de carbone.

5. Pré-imprégné selon la revendication 1 caractérisé en ce que la matrice résineuse durcissable est constituée d'une résine époxydique et d'une polyamine, cette dernière jouant le rôle de durcisseur.

6. Système composite renforcé par des fibres, plus spécialement stratifié renforcé par des fibres, qui a été fabriqué à partir du pré-imprégné selon la revendication 1 avec formage et réticulation de la matrice résineuse.